# EUROPEAN PATENT APPLICATION

(11) **EP 4 682 761 A1**
(43) Date of publication of application: **21.01.2026**
(21) Application number: 25775108.1
(22) Date of filing: 17.03.2025
(51) Int. Cl.: G06N 3/042, G06N 3/045, G06N 3/096, G06F 40/284, G06F 16/22

(54) **METHOD FOR ENHANCING PERFORMANCE OF LANGUAGE MODEL THROUGH STRUCTURAL KNOWLEDGE INJECTION AND SYSTEM THEREFOR**

(30) Priority: 29.03.2024 KR 20240043205
(71) Applicant: LG Management Development Institute Co., Ltd., Seoul 07336 (KR)
(72) Inventor: BAE, Kyung Hoon, Seoul 06597 (KR); LEE, Hong Lak, Seoul 07789 (KR); CHOI, Jung Kyu, Anyang-si, Gyeonggi-do 14099 (KR); SIM, Myo Seop, Bucheon-si, Gyeonggi-do 14541 (KR); MIN, Kyung Koo, Seoul 06560 (KR); CHOI, Joo Young, Goyang-si, Gyeonggi-do 10501 (KR); JUNG, Hae Min, Seoul 06664 (KR)
(74) Representative: BCKIP Part mbB
(86) International application number: PCT/KR2025/003426
(87) International publication number: WO 2025/206634

(57) **Abstract**

A method of enhancing language model performance through structured knowledge injection according to an embodiment of the present invention is performed by a computing system including a memory and a processor, and the method includes obtaining knowledge base data including a predetermined knowledge graph, generating linearly structured data by structuring the obtained knowledge base data into a text format, training a first language model based on the generated linearly structured data, and providing a predetermined application service based on the trained first language model, wherein the generating linearly structured data includes generating the first linearly structured data by structuring the knowledge graph in the text format based on multi-hop linearization.

## Description

### [Technical Field]

The present invention relates to a method and system for enhancing language model performance through structured knowledge injection. More specifically, the present invention relates to a method and system for transforming and structuring a predetermined knowledge graph based on multi-hop linearization and training a language model based on the structured knowledge graph.

### [Background Art]

Conventionally, pipeline-based language model training has been used as a method of distilling (integrating) external knowledge into a pre-trained language model.

Pipeline-based language model training is a traditional approach to performing natural language processing (NLP) tasks through sequential processing steps, with each step performing a specific task (e.g., tokenization, parsing, and/or named entity recognition) and passing results to the next step.

While this conventional training method was widely used in early natural language processing (NLP) systems, it has the following problems.

- Error Propagation: Small errors occurring in early stages of a pipeline can propagate to subsequent steps, significantly impacting the performance of the entire system. For example, errors in the tokenization step can reduce the accuracy of parsing, significantly reducing the quality of the final result.

- Intermodular Dependencies: Each step is considerably dependent on the output of the previous step, which impacts the performance of the entire system. Furthermore, changes or updates to one step can impact other modules in the entire pipeline, making maintenance difficult.

- Lack of Flexibility: Pipeline-based approaches rely on fixed processing routines, making it difficult to adapt or optimize for new types of tasks or data. Meeting new requirements often requires redesigning the entire pipeline.

- Complexity and Resource Consumption: Since a separate model or algorithm must be developed and optimized for each step, the overall system complexity can increase. This can be time-consuming and resource-intensive during development and learning.

- Limited Interaction: Each step in a pipeline operates largely independently and may not fully utilize detailed information of previous steps. This can limit the ability of a model to fully understand the entire context or complex linguistic patterns.

Therefore, a new language model training framework is required to address the aforementioned problems.

### [Disclosure]

### [Technical Problem]

An embodiment of the present invention is intended to address the aforementioned problems, and provides a method and system for transforming and structuring a predetermined knowledge graph based on multi-hop linearization and training a language model based on the structured knowledge graph.

In this regard, one embodiment of the present invention provides a method and system for training the language model based on masked language modeling.

However, the technical objects to be achieved by the present invention and embodiments of the present invention are not limited to the aforementioned technical objects, and other technical objects may be present.

### [Technical Solution]

A method of enhancing language model performance through structured knowledge injection performed by a computing system including a memory and a processor according to an embodiment of the present invention includes obtaining knowledge base data including a predetermined knowledge graph, generating linearly structured data by structuring the obtained knowledge base data into a text format, training a first language model based on the generated linearly structured data, and providing a predetermined application service based on the trained first language model, wherein the generating linearly structured data comprises generating the first linearly structured data by structuring the knowledge graph in the text format based on multi-hop linearization.

In another aspect, the knowledge graph is graphical data representing relationships between multiple entities based on nodes and edges, and includes at least one knowledge triple, which is data representing subject-predicate-object of data based on the nodes and the edges.

In another aspect, the generating first linearly structured data includes converting the subject-predicate-object data into a text format based on the knowledge triples connected in multiple steps within the knowledge graph.

In another aspect, the method further includes obtaining the knowledge base data including a predetermined table.

In another aspect, the generating linearly structured data further includes generating second linearly structured data by structuring the table into a text format based on predetermined unified structured knowledge grounding (UnifiedSKG) and JavaScript object notation (JSON).

In another aspect, the training a first language model includes masking at least a portion of text in the linearly structured data, and predicting the masked text based on the remaining text in the linearly structured data.

In another aspect, the masking at least a portion of text in the linearly structured data includes identifying key text in the linearly structured data, and replacing the identified key text with a mask token.

In another aspect, the training a first language model includes randomly masking at least a portion of text in the second linearly structured data based on the knowledge base data including the table, and predicting the randomly masked text based on the remaining text in the second linearly structured data.

In another aspect, the training a first language model includes additionally training a pre-trained language model.

A system for enhancing language model performance through structured knowledge injection according to an embodiment of the present invention includes at least one memory, and at least one processor configured to read at least one application stored in the memory and perform a method of enhancing language model performance through structured knowledge injection, wherein the processor is configured to structure knowledge base data including a predetermined knowledge graph into a text format based on a multi-hop linearization and sailent span masking process, train a first language model based on the structured knowledge base data, and provide a predetermined application service based on the trained first language model.

### [Advantageous Effects]

The method and system for enhancing language model performance through structured knowledge injection according to an embodiment of the present invention have the effect of transforming and structuring a predetermined knowledge graph based on multi-hop linearization, thereby transforming the knowledge graph into a clearer and more understandable text format and simultaneously minimizing information loss that occurs during the process of reflecting the meaning of the knowledge graph into text.

Furthermore, the method and system for enhancing language model performance through structured knowledge injection according to an embodiment of the present invention have the effect of utilizing training data with a more clearly structured structure to directly improve the training efficiency and performance of a language model by training the language model based on the structured knowledge graph, and significantly improving the ability of the trained language model to handle various tasks (e.g., question-answering, inference, comprehension, search, and/or recommendation).

Furthermore, the method and system for enhancing language model performance through structured knowledge injection according to an embodiment of the present invention have the effect of training the language model in a manner of enhancing contextual comprehension, reasoning ability, and training efficiency by training the language model based on masked language modeling, thereby providing a language model that more effectively applies and distills external knowledge.

However, the effects obtained from the present invention are not limited to the aforementioned effects, and other effects not mentioned herein will be clearly understood from the description below.

### [Description of Drawings]

FIG. 1 illustrates an exemplary block diagram of a computing system for implementing a structured knowledge injection framework service according to an embodiment of the present invention.
FIG. 2 illustrates an exemplary block diagram of a computing device for implementing the structured knowledge injection framework service according to an embodiment of the present invention.
FIG. 3 illustrates an exemplary block diagram of another aspect of a computing device for implementing the structured knowledge injection framework service according to an embodiment of the present invention.
FIG. 4 is a flowchart illustrating a method of enhancing language model performance through structured knowledge injection according to an embodiment of the present invention.
FIG. 5 is an exemplary diagram illustrating a knowledge graph according to an embodiment of the present invention.
FIG. 6 is an exemplary diagram illustrating first linearly structured data according to an embodiment of the present invention.
FIG. 7 is an exemplary diagram illustrating second linearly structured data according to an embodiment of the present invention.

### [Mode for Invention]

The present invention is capable of various modifications and embodiments, and thus specific embodiments are illustrated in the drawings and described in detail in the detailed description. The effects and features of the present invention, and methods for achieving the same will become clear with reference to the embodiments described in detail below together with the drawings. However, the present invention is not limited to the embodiments disclosed below and can be implemented in various forms. In the following embodiments, terms such as "first," "second," etc. are not used in a limiting sense but are used for the purpose of distinguishing one component from another. Furthermore, the singular expression includes plural expressions unless the context clearly indicates otherwise. Furthermore, terms such as "include" and "have" indicate the presence of a feature or a component described in the specification, and do not preemptively exclude the possibility of one or more other features or components being added. Furthermore, the sizes of components in the drawings may be exaggerated or reduced for convenience of explanation. For example, the size and thickness of each component shown in the drawings are arbitrarily shown for convenience of explanation, and thus the present invention is not necessarily limited to what is shown.

Hereinafter, embodiments of the present invention will be described in detail with reference to the attached drawings. When describing with reference to the drawings, identical or corresponding components are given the same reference numerals and redundant descriptions thereof will be omitted.

[Exemplary System Implementing Structured Knowledge Injection Framework Service]

Hereinafter, an exemplary system implementing a structured knowledge injection (SKI) framework service, which transforms and structures a predetermined knowledge graph based on multi-hop linearization and trains a language model based on the structured knowledge graph, will be described in detail with reference to the attached drawings.

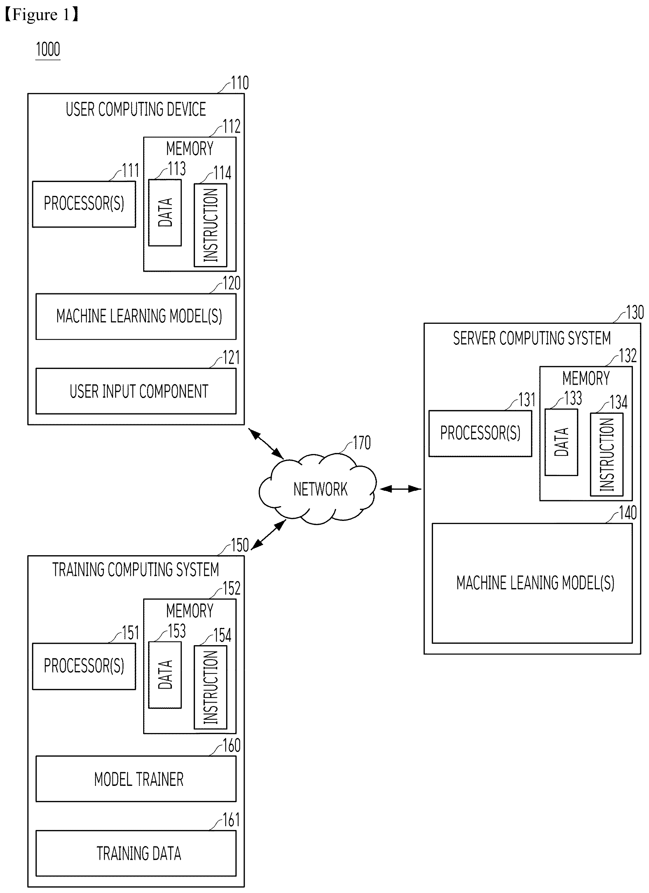

FIG. 1 illustrates an exemplary block diagram of a computing system implementing the SKI framework service according to an embodiment of the present invention.

Referring to FIG. 1, a computing system 1000 implementing the SKI framework service of the present invention includes a user computing device 110, a server computing system 130, and a training computing system 150, and these devices can communicate via a network 170.

A method of enhancing language model performance through structured knowledge injection according to an embodiment of the present invention may be 1) implemented and provided locally by the user computing device 110, 2) implemented and provided as a web service by the server computing system 130 communicating with the user computing device 110, or 3) implemented and provided by the user computing device 110 and the server computing system 130 in conjunction with each other.

In this case, the user computing device 110 and/or the server computing system 130 may interact with the training computing system 150 communicatively connected via the network 170 to train machine learning models 120 and/or 140. The training computing system 150 may be separate from the server computing system 130 or may be part of the server computing system 130.

An artificial intelligence model (a language model in the embodiment) may be 1) trained directly locally by the user computing device 110, 2) trained by the server computing system 130 and the user computing device 110 through interaction with each other via the network 170, or 3) trained by the separate training computing system 150 using various training techniques and learning methods. The artificial intelligence model (a language model in the embodiment) trained by the training computing system 150 may be provided/updated by being transmitted to the user computing device 110 and/or the server computing system 130 via the network 170.

In some embodiments, the training computing system 150 may be part of the server computing system 130 or part of the user computing device 110.

The user computing device 110 may include any type of computing device, such as a smartphone, a mobile phone, a digital broadcasting device, a personal digital assistant (PDA), a portable multimedia player (PMP), a desktop, a wearable device, an embedded computing device, and/or a tablet PC.

The user computing device 110 includes at least one processor 111 and memory 112. Here, the processor 111 may be composed of at least one processor or a plurality of electrically connected processors among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, microcontrollers, microprocessors, and/or other electrical units for performing functions.

The memory 112 may include one or more non-transitory/transitory computer-readable storage media such as a RAM, a ROM, an EEPROM, an EPROM, a flash memory device, a magnetic disk, and a combination thereof, and may include a web storage of a server that performs a memory storage function on the Internet. The memory 112 may store data 113 and instructions 114 necessary for the at least one processor 111 to perform functional operations such as training an artificial intelligence model (a language model in the embodiment) or executing various application services through an artificial intelligence model (a language model in the embodiment).

In an embodiment, the user computing device 110 may store at least one machine learning model 120.

Specifically, the machine learning model 120 may be a variety of machine learning models, such as a plurality of neural networks (e.g., deep neural networks), or other types of machine learning models, including nonlinear models and/or linear models, or may be configured as a combination thereof.

In this case, the neural networks may include at least one of feed-forward neural networks, recurrent neural networks (e.g., long short-term memory recurrent neural networks), convolutional neural networks, and/or other types of neural networks.

In an embodiment, the user computing device 110 may receive at least one machine learning model 120 from the server computing system 130 via the network 170, store the machine learning model 120 in the memory 112, and executes the stored machine learning model 120 using the processor 111 to perform various language model-based application services.

In another embodiment, the server computing system 130 includes at least one machine learning model 140, performs operations using the machine learning model 140, and provide the SKI framework service to the user by operating in association with the user computing device 110 in a manner of transmitting/receiving data related to the operations to/from the user computing device 110.

For example, the user computing device 110 may perform the SKI framework service in such a manner that the server computing system 130 provides output in response to a user input via the web using the machine learning model 140.

Additionally, an artificial intelligence model (a language model in the embodiment) may be implemented in such a manner that at least some machine learning models 120 and/or 140 are executed in the user computing device 110 and the rest are executed in the server computing system 130.

Additionally, the user computing device 110 may include at least one input component 121 that detects user input. For example, the user input component 121 may include a touch sensor (e.g., a touch screen and/or a touch pad) that detects the touch of a user's input medium (e.g., a finger or stylus), an image sensor that detects a user's motion input, a microphone that detects a user's voice input, a button, a mouse, and/or a keyboard. Furthermore, the user input component 121 may include an interface and an external controller when receiving input from an external controller (e.g., a mouse and/or a keyboard) through an interface.

The server computing system 130 includes at least one processor 131 and a memory 132. Here, the processor 131 may be composed of at least one processor or a plurality of electrically connected processors among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, micro-controllers, microprocessors, and/or other electrical units for performing functions.

The memory 132 may include one or more non-transitory/transitory computer-readable storage media, such as a RAM, a ROM, an EEPROM, an EPROM, a flash memory device, a magnetic disk, and a combination thereof. This memory 132 may store data 133 and instructions 134 necessary for the processor 131 to perform functional operations, such as training an artificial intelligence model (a language model in the embodiment) or executing various application services through an artificial intelligence model (a language model in the embodiment).

In an embodiment, the server computing system 130 may be implemented by including at least one computing device. For example, the server computing system 130 may be implemented such that a plurality of computing devices operates according to a sequential computing architecture, a parallel computing architecture, or a combination thereof. In addition, the server computing system 130 may include a plurality of computing devices connected via the network 170.

Additionally, the server computing system 130 may store at least one machine learning model 140. For example, the server computing system 130 may include a neural network and/or other multi-layer nonlinear models as the machine learning model 140. Exemplary neural networks may include feedforward neural networks, deep neural networks, recurrent neural networks, and convolutional neural networks.

The training computing system 150 includes at least one processor 151 and a memory 152. Here, the processor 151 may be composed of at least one processor or a plurality of electrically connected processors among a central processing unit (CPU), a graphics processing unit (GPU), application specific integrated circuits (ASICs), digital signal processors (DSPs), digital signal processing devices (DSPDs), programmable logic devices (PLDs), field programmable gate arrays (FPGAs), controllers, microcontrollers, microprocessors, and/or other electrical units for performing functions.

The memory 152 may include one or more non-transitory/transitory computer-readable storage media, such as a RAM, a ROM, an EEPROM, an EPROM, a flash memory device, a magnetic disk, and a combination thereof. This memory 152 may store data 153 and instructions 154 necessary for the processor 151 to perform training of an artificial intelligence model (a language model in the embodiment).

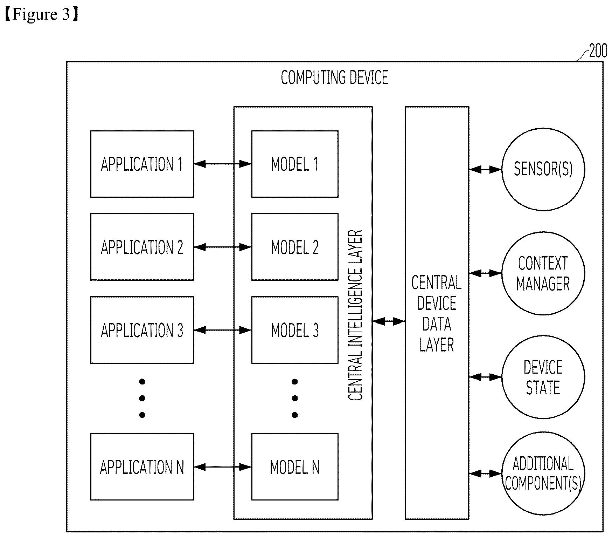

For example, the training computing system 150 may include a model trainer 160 that trains the machine learning models 120 and/or 140 stored in the user computing device 110 and/or the server computing system 130 using various training or learning techniques, such as backpropagation of errors (according to the framework illustrated in FIG. 3).

For example, the model trainer 160 may update one or more parameters of the machine learning models 120 and/or 140 using backpropagation based on a defined loss function.

In some implementations, performing backpropagation of errors may include performing truncated backpropagation through time. The model trainer 160 may perform a number of generalization techniques (e.g., weight reduction, dropout, and/or knowledge distillation) to improve the generalization ability of the trained machine learning models 120 and/or 140.

In particular, the model trainer 160 may train the machine learning models 120 and/or 140 based on a set of training data 161. The training data 161 may include data in different formats, such as images, audio samples, and/or text, for example. Examples of image types that can be used may include video frames, LiDAR point clouds, X-ray images, computed tomography scans, hyperspectral images, and/or various other forms of images.

Such training data 161 may be provided by the user computing device 110 and/or the server computing system 130. When the training computing device trains the machine learning models 120 and/or 140 on specific data from the user computing device 110, the machine learning models 120 and/or 140 may be characterized as personalized models.

The model trainer 160 includes computer logic utilized to provide a desired function.

Furthermore, the model trainer 160 may be implemented as hardware, firmware, and/or software that control a general-purpose processor. In an implementation, the model trainer 160 may include a program file stored in a storage device, loaded into the memory 152, and executed by the one or more processors 151. In another implementation, the model trainer 160 includes one or more sets of computer-executable data 153 and instructions 154 stored in a tangible computer-readable storage medium, such as a RAM hard disk or an optical or magnetic medium.

The network 170 may include a 3rd Generation Partnership Project (3GPP) network, a Long Term Evolution (LTE) network, a World Interoperability for Microwave Access (WIMAX) network, the Internet, a Local Area Network (LAN), a Wireless Local Area Network (WLAN), a Wide Area Network (WAN), a Personal Area Network (PAN), a Bluetooth network, a satellite broadcasting network, an analog broadcasting network, and/or a Digital Multimedia Broadcasting (DMB) network, but the present invention is not limited thereto.

Generally, communication over the network 170 may be performed using any type of wired and/or wireless connection through various communication protocols (e.g., TCP/IP, HTTP, SMTP, and/or FTP), encodings or formats (e.g., HTML and/or XML), and/or protection schemes (e.g., VPN, Secure HTTP, and/or SSL).

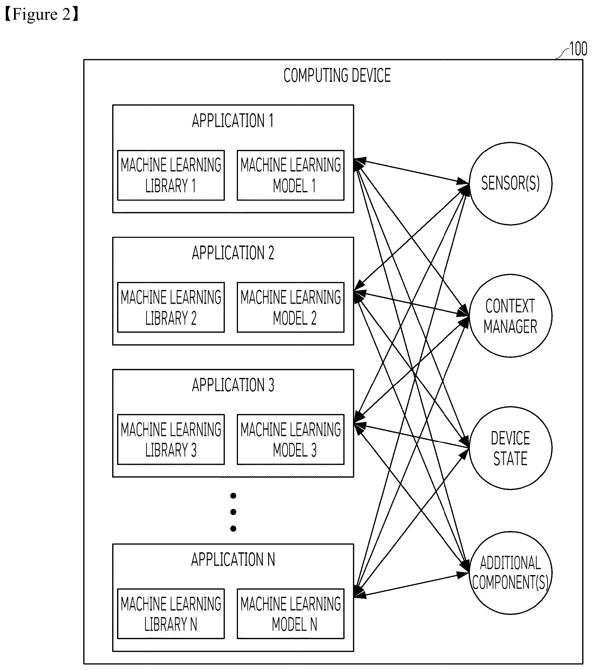

FIG. 2 illustrates an exemplary block diagram of a computing device implementing the SKI framework service according to an embodiment of the present invention.

As illustrated in FIG. 2, a computing device 100, which is included in the user computing device 110, the server computing system 130, and the training computing system 150, includes multiple applications (e.g., application 1 to application N). Each application may include a machine learning library and one or more machine learning models. For example, the applications may include an image processing (e.g., detection, classification, and/or segmentation) application, a text messaging application, an email application, a dictation application, a virtual keyboard application, a browser application, and/or a chatbot application.

In an embodiment, the computing device 100 may include the model trainer 160 for training an artificial intelligence model (a language model in the embodiment), and may store and operate the trained artificial intelligence model (a language model in the embodiment) to provide output data according to predetermined input data (predetermined query data in an embodiment).

Each application on the computing device 100 may communicate with multiple other components of the computing device 100, such as one or more sensors, a context manager, a device state component, and/or additional components, for example. In an embodiment, each application may communicate with each device component using an API (e.g., a public API). In an embodiment, the API used by each application may be specific to that application.

FIG. 3 illustrates an exemplary block diagram of another aspect of the computing device 100 implementing the SKI framework service according to an embodiment of the present invention.

Referring to FIG. 3, a computing device 300 includes multiple applications (e.g., application 1 to application N). Each application may communicate with a central intelligence layer. For example, the applications may include an image processing application, a text messaging application, an email application, a dictation application, a virtual keyboard application, and/or a browser application. In an embodiment, each application may communicate with the central intelligence layer (and models stored therein) using an API (e.g., a common API for all applications).

The central intelligence layer may include multiple machine learning models. For example, as illustrated in FIG. 3, at least some machine learning models may be provided to each application and managed by the central intelligence layer. In other implementations, two or more applications may share a single machine learning model. For example, in some implementations, the central intelligence layer may provide a single model to all applications. In some implementations, the central intelligence layer may be included within the operating system of the computing device 300 or implemented differently.

The central intelligence layer may communicate with a central device data layer. The central device data layer may be a centralized data repository for the computing device 300. As illustrated in FIG. 3, the central device data layer may communicate with a number of other components of the computing device 300, such as one or more sensors, a context manager, a device state component, and/or additional components, for example. In some implementations, the central device data layer may communicate with each device component using an API (e.g., a private API).

The techniques described herein may refer to servers, databases, software applications, and other computer-based systems, as well as actions taken and information transmitted to or from such systems. It will be appreciated that the inherent flexibility of computer-based systems allows for a wide range of possible configurations, combinations, and division of labor and functionality between and among components. For example, the processes described herein may be implemented using a single device or component, or multiple devices or components operating in combination. Databases and applications may be implemented in a single system or distributed across multiple systems. Distributed components may operate sequentially or in parallel.

[Method of Enhancing Language Model Performance through Structured Knowledge Injection]

Hereinafter, a method by which a computing system 1000 according to an embodiment of the present invention implements a structured knowledge injection (SKI) framework service, which transforms and structures a predetermined knowledge graph based on multi-hop linearization and trains a language model based on the structured knowledge graph, will be described in detail.

The method of enhancing language model performance through structured knowledge injection by the computing system 1000 according to an embodiment of the present invention can provide a language model trained based on structured training data (i.e., linearly structured data) and improve the performance and quality of various application services utilizing the language model.

In this case, the method of enhancing language model performance through structured knowledge injection by the computing system 1000 according to an embodiment of the present invention can further enhance the task processing performance and quality of the language model by providing a language model trained based on a training method (i.e., SSM, etc.) according to an embodiment of the present invention.

Hereinafter, the method of enhancing language model performance through structured knowledge injection according to an embodiment of the present invention will be described in more detail with reference to the attached drawings.

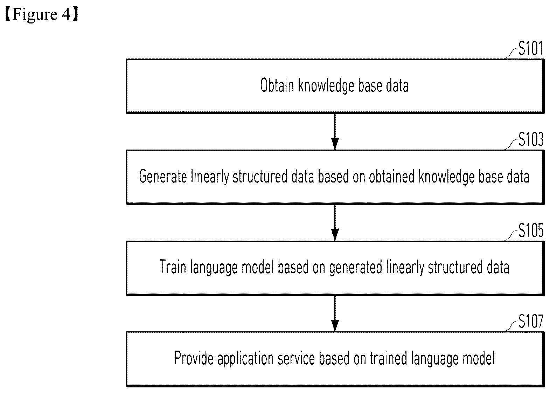

FIG. 4 is a flowchart illustrating the method of enhancing language model performance through structured knowledge injection according to an embodiment of the present invention.

Referring to FIG. 4, the method of enhancing language model performance through structured knowledge injection according to an embodiment of the present invention may include a step of obtaining knowledge base data (S101), a step of generating linearly structured data based on the obtained knowledge base data (S103), a step of training a language model based on the generated linearly structured data (S105), and a step of providing an application service based on the trained language model (S107).

Specifically, the computing system 1000 according to an embodiment of the present invention may obtain knowledge base data (S101).

Here, the "knowledge base data" according to the embodiment may refer to data of various formats used for language model training.

In an embodiment, knowledge base data may include a predetermined knowledge graph (KG), a table, and/or JSON data.

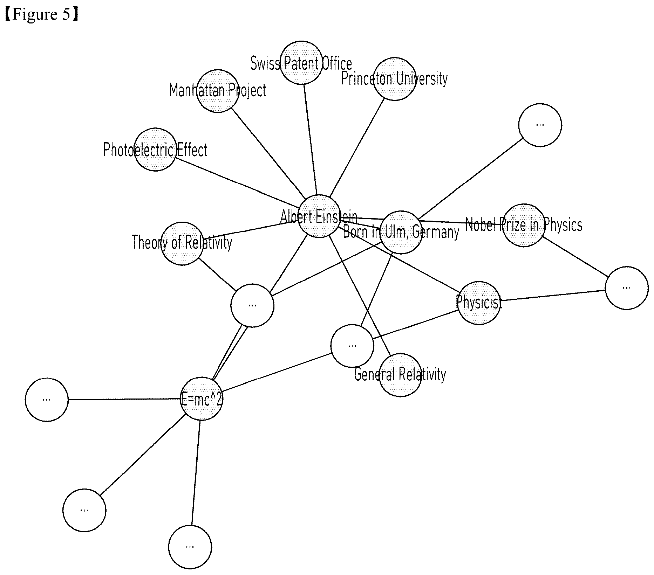

FIG. 5 is an exemplary diagram illustrating a knowledge graph according to an embodiment of the present invention.

Referring to FIG. 5, a knowledge graph (KG) may refer to graphical data that represents entities, concepts, and/or events, and relationships therebetween using nodes and edges.

Such a knowledge graph (KG) can clearly and intuitively express complex information and relationships, enabling various inferences and analyses based on this information.

Specifically, a knowledge graph (KG) may include nodes representing entities, concepts, and/or events, edges representing relationships between nodes, and attributes providing additional information about the nodes (e.g., the properties or characteristics of entities).

For example, the nodes of a predetermined knowledge graph (KG) may be "movie director name" and "Hollywood," the edges may be "(movie director name, activity area, Hollywood)," and the attributes may be "movie director name: date of birth, place of birth."

Specifically, in an embodiment, the computing system 1000 may provide a user interface (hereinafter, a knowledge base data input interface) through which predetermined knowledge base data can be input.

The computing system 1000 may obtain the knowledge base data as described above based on user input through the provided knowledge base data input interface.

According to an embodiment, the computing system 1000 may also obtain the aforementioned knowledge base data through connection with a predetermined external server.

Furthermore, in an embodiment, the computing system 1000 may generate linearly structured data based on the obtained knowledge base data. (S103)

Here, the linearly structured data according to the embodiment may refer to data obtained by converting the predetermined knowledge base data into a text format.

That is, in an embodiment, the linearly structured data may be data obtained by linearly converting the knowledge base data, which may include various types of data with heterogeneous structures, into a text format.

In an embodiment, such linearly structured data may include first linearly structured data, which is obtained by converting knowledge base data into a text format using a multi-hop linearization (MHL) method, and second linearly structured data, which is obtained by converting knowledge base data into a text format using another method (predetermined UnifiedSKG and/or JSON method in an embodiment).

Specifically, in an embodiment, if the obtained knowledge base data is knowledge graph (KG) data, the computing system 1000 may generate first linearly structured data, which is obtained by converting the knowledge graph (KG) data into a text format using the multi-hop linearization (MHL) method.

For reference, multi-hop linearization (MHL) refers to a process of linearly converting connected information in a complex knowledge graph (KG) or information structure through multiple steps. This approach can be applied in various fields, such as information retrieval, natural language processing (NLP), and/or recommendation systems, and is particularly useful in tasks utilizing knowledge graphs (KGs).

Here, the "hop" may be an element representing the number of connections (edges) or travel distance required to move from one node (vertex) to another in a knowledge graph (KG) or a network.

Furthermore, the "multi-hop" refers to a case where multiple connections are required between two nodes, which may mean that multiple steps are required to track or infer information.

Furthermore, the "linearization" refers to the process of converting information or data into a linear form, i.e., a sequential structure. This process can reconstruct data with complex relationships or structures into a simpler and more accessible form (text format in an embodiment).

In an embodiment, through the multi-hop linearization (MHL) described above, the computing system 1000 may simplify and understand the complex relationships between various pieces of information across multiple steps contained in a predetermined knowledge graph (KG) and generate first linearly structured data in a form that is easily utilized in various tasks and the computing systems 1000.

More specifically, in an embodiment, the computing system 1000 may generate first linearly structured data by converting at least one knowledge triple (KT) within knowledge graph (KG) data into a text format using multi-hop linearization (MHL).

Here, for reference, a knowledge triple (KT) is a basic unit representing information in a knowledge graph (KG), and is typically configured in the form of "subject of data-predicate between subject and object-object that is the target of predicate." These three elements can represent a node and an edge of the knowledge graph (KG).

For example, the subject of a knowledge triple (KT) may be "Albert Einstein," the predicate may be "place of birth," and the object may be "Germany."

Based on a set of such knowledge triples (KT), a knowledge graph (KG) can be constructed, forming a large-scale, interconnected network of information.

Specifically, in an embodiment, the computing system 1000 may set any one of a plurality of nodes included in knowledge graph (KG) data as a subject node.

The computing system 1000 may connect at least one knowledge triple (KT) associated with the established subject node within a hop count range.

For example, the computing system 1000 can obtain the following first knowledge graph (KG).

### [First Knowledge Graph (KG)]

* Nodes: People (Alice, Bob), Cities (New York, Paris), Companies (Google)
* Edges: (Alice, lives, New York), (Bob, works, Google), (Google, is located, New York), (Alice, friend, Bob), (New York, is located, Paris)

In this example, the computing system 1000 may generate first linearly structured data by linearizing multi-hop information from "Alice" to "Paris" on the first knowledge graph (KG), as follows.

### [First Knowledge Graph (KG) - First Linearly Structured Data]

1. Alice -> Lives -> New York
2. New York -> Located -> Paris

That is, in this example, the computing system 1000 can generate first linearly structured data that clearly represents the indirect relationship between "Alice" and "Paris" within the first knowledge graph (KG) in a text format through multi-hop linearization (MHL), as described above.

In this manner, in the embodiment, the computing system 1000 can perform a knowledge structuring process that converts a predetermined knowledge graph (KG) into a natural text format using the multi-hop linearization (MHL) method.

Accordingly, the computing system 1000 can minimize the loss of information that occurs in the process of reflecting the meaning of a knowledge graph (KG) in text compared to conventional methods (e.g., a pipeline transformation method based on a multi-step process such as "entity detection and connection," "subgraph representation," and "graph and text form injection"), and at the same time, structure the knowledge graph (KG) into a text format that is clearer and easier to understand and perform language model training based thereon.

Thus, the computing system 1000 can directly improve the training efficiency and performance of the language model by utilizing training data with a more clearly defined structure, and significantly enhance the processing capabilities of the trained language model for various tasks (e.g., question-answering, inference, comprehension, search, and/or recommendation).

Meanwhile, in an embodiment, if obtained knowledge base data is table data, the computing system 1000 may generate second linearly structured data, which is obtained by converting the table data into a text format based on a predetermined UnifiedSKG and/or JSON format.

Here, for reference, UnifiedSKG (Unified Structured Knowledge Grounding) refers to an integrated approach that utilizes various structured knowledge sources (e.g., tables, knowledge graphs (KGs), and/or lists) to perform natural language processing (NLP) tasks. This approach can implement more accurate and consistent natural language task processing through understanding and utilization of various structured knowledge sources.

Additionally, for reference, JSON (JavaScript Object Notation) refers to a lightweight text-based data exchange format used when storing or transmitting data.

More specifically, in an embodiment, the computing system 1000 may generate second linearly structured data by converting table data into a text format based on a predetermined UnifiedSKG and/or JSON format.

As described above, in an embodiment, the computing system 1000 may convert and structure knowledge base data (e.g., a knowledge graph (KG) and/or table data in an embodiment) that may include various heterogeneous data types into a simple and clear text format.

Accordingly, the computing system 1000 can implement language model training, i.e., language model knowledge enhancement, based on text-based structured knowledge injection that enhances deep learning performance.

Furthermore, in an embodiment, the computing system 1000 may train a language model based on the generated linearly structured data. (S105)

Specifically, in an embodiment, the computing system 1000 may train a predetermined language model using the linearly structured data generated as described above.

That is, the computing system 1000 may train the predetermined language model using the first linearly structured data, which is obtained by structuring knowledge graph (KG) data into a text format using multi-hop linearization (MHL), and/or the second linearly structured data, which is obtained by structuring table data into a text format using a predetermined UnifiedSKG.

Here, the language model (hereinafter, "first language model") according to an embodiment may include a pre-trained language model (PLM).

Accordingly, the computing system 1000 may perform additional training on the first language model based on the linearly structured data.

In this case, in an embodiment, the computing system 1000 may train the first language model based on the linearly structured data using masked language modeling (MLM).

Here, for reference, masked language modeling (MLM) is a pre-training method used in the field of natural language processing (NLP), and is particularly widely used for training transformer-based models (e.g., BERT (Bidirectional Encoder Representations from Transformers).

Such masked language modeling (MLM) can operate by randomly masking certain words or tokens within given text and allowing a model to predict the masked words or tokens based on the context of the remaining words or tokens., thereby allowing the model to develop the ability to understand the bidirectional context of the text.

Through this process, the model can achieve improved performance in understanding the context in which words or tokens are used within the text. Further details will be provided in accordance with previously disclosed descriptions.

More specifically, in an embodiment, the computing system 1000 may perform first language model training based on the linearly structured data based on sailent span masking (SSM) that is an extended form of the mask language modeling (MLM) training strategy.

Here, for reference, sailent span masking (SSM) is a training method that, rather than randomly masking arbitrary words or tokens within text during pre-training, identifies semantically significant portions of the text, replaces (i.e., masks) the identified significant portions with [MASK] tokens, and predicts the masked portions (spans) based on the surrounding context, thereby developing contextual understanding of the text and the ability to infer key information.

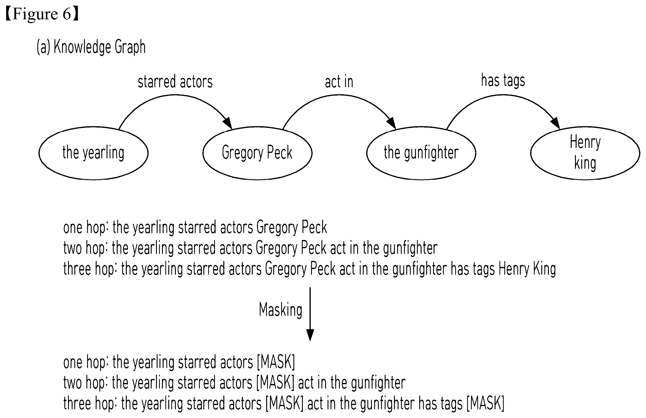

FIG. 6 is an exemplary diagram illustrating first linearly structured data according to an embodiment of the present invention.

For example, referring to FIG. 6, the computing system 1000 can generate first linearly structured data according to the second knowledge graph (KG) of FIG. 6 as follows.

### [Second Knowledge Graph (KG) - First Linearly Structured Data]

1 (one hop). the yearling starred actors Gregory peck
2 (two hop). the yearling starred actors Gregory peck act in the gunfighter
3 (three hop). the yearling starred actors Gregory Peck act in the gunfighter has tag Henry King

In this example, the computing system 1000 can apply the first linearly structured data described above to the first language model training using sailent span masking (SSM).

At this time, as sailent span masking (SSM) is performed, the first object of the first linearly structured data may be masked, for example, in the case of one-hop and two-hop linearization, and the first and last objects may be masked in the case of three-hop linearization.

### [Second Knowledge Graph (KG) - First Linearly Structured Data - Sailent span masking (SSM) Applied]

1 (one hop). the yearling starred actors [MASK]
2 (two hop). the yearling starred actors [MASK] act in the gunfighter
3 (three hop). the yearling starred actors [MASK] act in the gunfighter has tag [MASK]

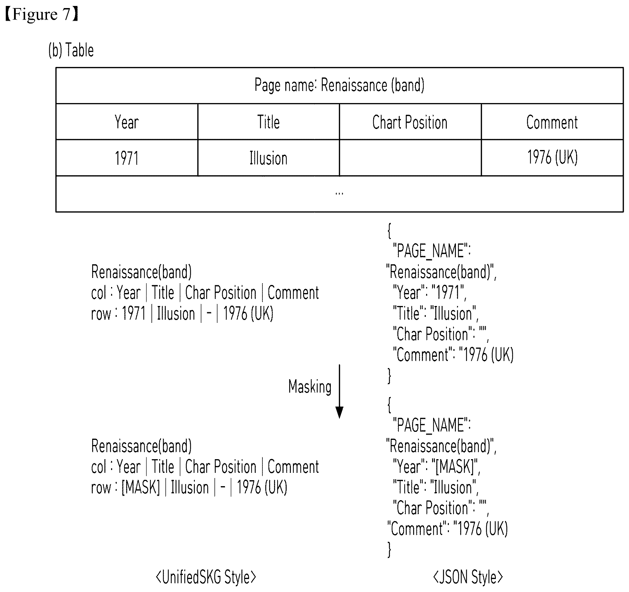

FIG. 7 is an exemplary diagram illustrating second linearly structured data according to an embodiment of the present invention.

As another example, referring to FIG. 7, the computing system 1000 can generate second linearly structured data according to the first table of FIG. 7 as follows.

**[Table 1 - Second Linearly Structured Data (UnifiedSKG Style)]**

| |
|---|
| Renaissance (band) |
| col: Year \| Title \| Char Position \| Comment |
| row: 1971 \| Illusion \| - \| 1976 (UK) |
| [Table 1 - Second Linearly Structured Data (JSON Style)] |
| { |
| "PAGE_NAME": "Renaissance (band)", |
| "Year": "1971", |
| "Title": "Illusion", |
| "Char Position": "", |
| "Comment": "1976 (UK)" |
| } |

Additionally, in this example, the computing system 1000 can apply the second linearly structured data described above to first language model training using sailent span masking (SSM).

Here, in some embodiments, the computing system 1000 may perform random masking on the second linearly structured data.

**[Table 1 - Second Linearly Structured Data (UnifiedSKG Style) - Sailent span masking (SSM) Applied]**

| |
|---|
| Renaissance (band) |
| col: Year \| Title \| Char Position \| Comment |
| row: [MASK] \| Illusion \| - \| 1976 (UK) |
| [Table 1 - Second Linearly Structured Data (JSON Style) - Sailent span masking (SSM) |
| Applied] |
| { |
| "PAGE_NAME": "Renaissance (band)", |
| "Year": "[MASK]", |
| "Title": "Illusion", |
| "Char Position": "", |
| "Comment": "1976 (UK)" |
| } |

As described above, the computing system 1000 in this embodiment can perform language model training using linearized knowledge, as described above, based on a training method based on mask language modeling (MLM).

That is, the computing system 1000 can perform language model training based on linearly structured data according to an embodiment of the present invention using a training method that enhances contextual understanding, reasoning ability, and training efficiency.

Accordingly, the computing system 1000 can implement and provide a language model (for example, a pre-trained language model (PLM)) that more effectively applies and distills certain external knowledge.

Additionally, in the embodiment, the computing system 1000 may provide application services based on the trained language model. (S107)

That is, in the embodiment, the computing system 1000 can provide various application services based on the language model trained based on the linearly structured data generated as described above.

In an embodiment, the computing system 1000 may provide a chatbot (virtual assistant) service, an automatic translation service, a text generation and summary service, an education and learning assistant service, an information retrieval and recommendation service, and/or a code generation and analysis tool service based on the trained language model.

In this manner, in the embodiment, the computing system 1000 can easily support various application services based on a language model with enhanced training and task processing performance, thereby effectively improving the performance and quality thereof.

The method and system for enhancing language model performance through structured knowledge injection according to an embodiment of the present invention have the effect of transforming and structuring a predetermined knowledge graph (KG) based on multi-hop linearization (MHL) to convert the knowledge graph (KG) into a clearer and more understandable text format and simultaneously minimize information loss that occurs during the process of reflecting the meaning of the knowledge graph (KG) into text.

Furthermore, the method and system for enhancing language model performance through structured knowledge injection according to an embodiment of the present invention have the effect of training a language model based on the structured knowledge graph (KG) to directly improve the training efficiency and performance of the language model by utilizing training data with a more clearly structured structure, and significantly enhance the ability of the trained language model to process various tasks (e.g., question-answering, inference, comprehension, search, and/or recommendation).

In addition, the method and system for enhancing language model performance through structured knowledge injection according to an embodiment of the present invention have the effect of providing a language model that more effectively applies and distills external knowledge by performing language model training in a manner that enhances contextual comprehension, reasoning ability, and training efficiency by training the language model based on mask language modeling (MLM).

Meanwhile, the embodiments of the present invention described above may be implemented in the form of program instructions that can be executed through various computer components and recorded on a computer-readable recording medium. The computer-readable recording medium may include program instructions, data files, data structures, etc., either singly or in combination. The program instructions recorded on the computer-readable recording medium may be specially designed and configured for the present invention or may be known and usable by those skilled in the art of computer software. Examples of computer-readable recording media include magnetic media such as hard disks, floppy disks, and magnetic tapes, optical recording media such as CD-ROMs and DVDs, magneto-optical media such as floptical disks, and hardware devices specifically configured to store and execute program instructions, such as ROMs, RAMs, and flash memories. Examples of program instructions include not only machine language codes generated by a compiler, but also high-level language codes that can be executed by a computer using an interpreter, etc. Hardware devices may be modified into one or more software modules to perform processing according to the present invention, and vice versa.

The specific implementations described in the present invention are exemplary embodiments and do not limit the scope of the present invention in any way. For the sake of brevity, descriptions of conventional electronic components, control systems, software, and other functional aspects of the systems may be omitted. Furthermore, the lines or connection elements between components depicted in the drawings are merely illustrative of functional connections and/or physical or circuit connections, and these connections may be replaced or represented as various additional functional, physical, or circuit connections in actual devices. Furthermore, unless specifically stated as "essential," "important," or the like, a component may not be absolutely necessary for the application of the present invention.

Although the detailed description of the present invention has been made with reference to preferred embodiments of the present invention, it will be understood by those skilled in the art or those with ordinary knowledge in the art that various modifications and variations can be made to the present invention without departing from the spirit and scope of the present invention as set forth in the claims. Therefore, the technical scope of the present invention should not be limited to the details described in the detailed description of the specification, but should be defined by the scope of the claims.

### [Industrial Applicability]

The present invention relates to a method and system for enhancing language model performance through structured knowledge injection, and is applicable to the artificial intelligence industry, thus having industrial applicability.

## Claims

1. A method of enhancing language model performance through structured knowledge injection by a computing system including a memory and a processor, the method comprising:
obtaining knowledge base data including a predetermined knowledge graph;
generating linearly structured data by structuring the obtained knowledge base data into a text format;
training a first language model based on the generated linearly structured data; and
providing a predetermined application service based on the trained first language model,
wherein the generating linearly structured data comprises generating the first linearly structured data by structuring the knowledge graph in the text format based on multi-hop linearization.

2. The method of claim 1, wherein the knowledge graph is graphical data representing relationships between multiple entities based on nodes and edges, and includes at least one knowledge triple, which is data representing subject-predicate-object of data based on the nodes and the edges.

3. The method of claim 2, wherein the generating first linearly structured data comprises converting the subject-predicate-object data into a text format based on the knowledge triples connected in multiple steps within the knowledge graph.

4. The method of claim 1, further comprising obtaining the knowledge base data including a predetermined table.

5. The method of claim 4, wherein the generating linearly structured data further comprises generating second linearly structured data by structuring the table into a text format based on predetermined unified structured knowledge grounding (UnifiedSKG) and JavaScript object notation (JSON).

6. The method of claim 1, wherein the training a first language model comprises:
masking at least a portion of text in the linearly structured data; and
predicting the masked text based on the remaining text in the linearly structured data.

7. The method of claim 6, wherein the masking at least a portion of text in the linearly structured data comprises:
identifying key text in the linearly structured data; and
replacing the identified key text with a mask token.

8. The method of claim 5, wherein the training a first language model comprises:
randomly masking at least a portion of text in the second linearly structured data based on the knowledge base data including the table; and
predicting the randomly masked text based on the remaining text in the second linearly structured data.

9. The method of claim 1, wherein the training a first language model comprises additionally training a pre-trained language model.

10. A system for enhancing language model performance through structured knowledge injection, comprising:
at least one memory; and
at least one processor configured to read at least one application stored in the memory and
perform a method of enhancing language model performance through structured knowledge injection,
wherein the processor is configured to:
structure knowledge base data including a predetermined knowledge graph into a text format based on a multi-hop linearization and sailent span masking process;
train a first language model based on the structured knowledge base data; and
provide a predetermined application service based on the trained first language model.
